# EUROPEAN PATENT SPECIFICATION

(11) **EP 2 070 248 B1**
(45) Date of publication and mention of the grant of the patent: **10.10.2018**
(21) Application number: 07717214.6
(22) Date of filing: 05.02.2007
(51) Int. Cl.: H04L 9/00

(54) **SYSTEM AND METHOD FOR FACILITATING SECURE ONLINE TRANSACTIONS**
SYSTEM UND VERFAHREN ZUR ERMÖGLICHUNG VON SICHEREN ONLINE-TRANSAKTIONEN
SYSTÈME ET PROCÉDÉ POUR FACILITER DES TRANSACTIONS EN LIGNE SÉCURISÉES

(30) Priority: 27.09.2006 US 827118 P
(43) Date of publication of application: 17.06.2009
(73) Proprietor: SecureAuth Corporation, Irvine, CA 92618 (US)
(72) Inventor: LUND, Craig, Irvine, CA 92612 (US); GRAJEK, Garret, Huntington Beach, CA 92647 (US); MOORE, Stephen, Portland, OR 97217 (US)
(74) Representative: Gervasi, Gemma
(86) International application number: PCT/US2007/003219
(87) International publication number: WO 2008/039227

(56) References cited:
- US-A1- 2002 010 684
- US-A1- 2003 037 237
- US-A1- 2005 065 855
- MENEZES, OORSCHOT, VANSTONE: "Handbook of Applied Cryptography", 1 January 1997 (1997-01-01), CRC Press Series on Discrete Mathematics and Its Applications, Ontario, Canada, XP002655261, ISBN: 0-8493-8523-7 * Document consists of pages 397-400, 403-405 * * page 403, paragraph 10.3.3 - page 405 * * page 397, paragraph 10.3.1 - page 400 *

## Description

### BACKGROUND

### 1. Technical Field

The present invention generally relates to methods and systems for authentication in secure data communications. More particularly, the present invention relates to methods and systems for bi-directionally authenticating the client and the server using a plurality of factors including a public key infrastructure (PKI) certificate.

### 2. Related Art

Banking, financial services, government, education, and all varieties of companies rely upon advanced computer systems and data communication networks such as the Internet. While such advancements have greatly increased the speed and convenience with which business is conducted, numerous vulnerabilities compromise the security of the highly sensitive and confidential data being exchanged. At the most basic level, electronic transactions typically involve a server computer system and a client computer system communicating over a network. Additional client or server computer systems may also be connected to the network, such that multiple clients may access a given server, or multiple servers may be accessed by a given client. In this open network environment, the primary concern of data security is three-fold. First, the server must be assured that the client is what it asserts it is. Second, the client must be assured that the server is what it asserts it is. Third, any information being exchanged between a legitimate server and a legitimate client must not be intercepted or changed by any other computer systems on the network.

In the electronic banking setting, for example, the bank must authenticate the identity of the user accessing the banking server, so that transactions relating only to a particular customer are permitted, and that the user accessing the banking server is verified as the customer or someone given authority by the customer. The client must be ensured that the banking server is, indeed, the server operated by the bank, and not a similar one operated by a malicious entity. This is known as a phishing attack, where a fake server is made to resemble the legitimate server, and tricks the user into providing confidential information such as bank account numbers, social security numbers, passwords, and the like. Much harm may be inflicted on the customer by a criminal possessing such information, including erroneous accumulation of debt, arrest records, criminal convictions, destruction of creditworthiness, damage to reputation, and so forth. These are also known as identity theft crimes. As confidential information is being transmitted over an open network, such information must be encrypted or otherwise rendered incomprehensible to any other system besides the client and the server. The open nature of the network renders computer systems susceptible to replay attacks, where a valid data transmission is intercepted and repeated later for fraudulent or malicious purposes. For example, passwords or other authentication information may be intercepted, and used later to gain access to sensitive information. Further, the information being transmitted on the network must not be modifiable, such as in the case of man-in-the-middle attacks. This involves an attacker reading, inserting and modifying data between a legitimate client and server with neither recognizing the compromised nature of the link.

A variety of techniques is used to authenticate, or verify the identity of the client. Authentication may utilize one or more factors, which include something a user knows, something a user has, and something a user is. Most often, only a single factor is utilized because of the added cost and complexity of additional authentication factors. In such single-factor authentication systems, the most common is the use of a password or a personal identification number (PIN) to limit access. Another example is an ATM card with a corresponding PIN. The server maintains a list of usernames and corresponding passwords/PINs, and when the entered username and password/PIN combination is determined to be correct after a comparison to the list, access to the system is permitted. The secret nature of passwords and PINs, at least in theory, prevents unauthorized users from accessing the computer system. This technique is ineffective because the authorized users oftentimes mistakenly and unwittingly reveal their passwords or PINs to an unauthorized user. Furthermore, brute-force techniques involving the entry of every combination of letters, numbers, and symbols, as well as dictionary-based techniques, may further compromise the effectiveness of such authentication systems. Because passwords must be memorized, users often choose words that are easier to remember, making it more susceptible to defeat by means of dictionary attacks. On the other hand, the more complex the passwords are required to be, the more likely that the password will be written on something easily accessible, for both the legitimate and malicious user, in the vicinity of the computer. As asserted by the Federal Financial Institutions Examination Council (FFIEC), single factor authentication is a substantial weakness, particularly in financial or banking-related on-line services.

In addition to passwords, an additional factor may be utilized that involves something a user has. These include simple devices that are connected to the client computer through an external peripheral port, as well as sophisticated tokens that generate unique codes or one-time passwords (OTP) that are that are entered in conjunction with a username and a password as described above. Currently available token-based authentication systems include the RSA SecureID, which utilizes a time-synchronized OTP, and the Verisign Unified Authentication, which utilizes a mathematical algorithm-based OTP. While greatly increasing security, token devices are expensive to license, expensive to maintain, and cumbersome for the user to carry. As with any diminutive device, tokens are easy to lose. When lost, it may take days or weeks for a replacement, resulting in additional cost and lost productivity.

A third authentication factor utilizes unique biometric attributes of a person, such as fingerprints, retinal and facial patterns, voice characteristics, and handwriting patterns. Biometric authentication, however, requires the deployment of specialized hardware for acquiring such data including fingerprint and retina scanners, microphones, and the like. Furthermore, specialized databases and software are required for comparing the acquired data to existing user data, otherwise referred to as enrollment data. Thus, the cost of such deployment is prohibitive, and is for the most part limited to large organizations. Additionally, biometric readings may be inconsistent from one acquisition to the next, thereby resulting in false negatives. Though fingerprint identification is being increasingly used in portable computers to secure access to applications and data therein, the use of such devices to authenticate with other computer systems is uncommon because of the need to maintain an enrollment database.

To authenticate the server computer system, and to ensure that data transmissions are not intercepted, the Transport Layer Security (TLS) protocol is frequently utilized. TLS is a cryptographic protocol that provides data exchanges safe from eavesdropping, tampering, and forgery, and is often used for securing web browsing, e-mail, file transfers, and other such electronic transactions. More particularly, TLS operates on the protocol layers below application-layer protocols such as the HyperText Transfer Protocol (HTTP), File Transfer Protocol (FTP), Simple Mail Transfer Protocol (SMTP), but above the transport level protocols such as the Transmission Control Protocol (TCP) or the User Datagram Protocol (UDP). Various components of a public key infrastructure (PKI) conforming to the International Telecommunications Union - Telecommunications Standardization Sector (ITU-T) PKI standard X.509 are utilized in the TLS protocol.

Generally, public key encryption involves a unique public/private key pair held by both the recipient and the sender. The private key of the sender is retained solely by the sender, and the private key of the recipient is retained solely by the recipient. The public key of the sender is distributed and is held by the recipient, and the public key of the recipient is also distributed and held by the sender. When transmitting a message, the sender's private key and the recipient's public key is used to encrypt the message. The message is decrypted by the recipient using the recipient's private key and the sender's public key. The recipient need not have a unique public/private key pair, however, and instead may utilize a one-time cipher.

TLS is commonly implemented only on a server-side basis, however, and only the server is authenticated. For example, when establishing a secure HyperText Transfer Protocol (HTTP) connection from a client browser to a web server, the client browser retrieves a digital certificate associated with the web server. The certificate, which contains the public key, is used by the browser to authenticate the identity of the web server, and to encrypt a session key transmitted back to the web server for use in encrypting subsequent data. In order to ensure the legitimacy of the server certificate, it is signed by a Certification Authority (CA).

Though the implementation of client-side TLS establishes a bilateral trust between the server and the client and prevents identity theft and phishing attacks, there are a number of significant deficiencies. More particularly, it is necessary for the client to obtain or purchase a certificate properly signed by the CA. Thus, complications associated with certificate ownership are placed on the user. Additionally, implementing client authentication on the server is a cumbersome process, in that additional servers and maintenance is necessary. In addition to the other core functionality provided by the server, it must be configured to issue user certificates.

Accordingly, there is a need in the art for a method and system for authenticating the client and the server without the use of hardware devices such as tokens or the deployment of client-side TLS. There is also a need for such authentication to be over multiple factors. Furthermore, there is a need for an improved method and system for initiating an encrypted data communications session using authentication credentials. There is also a need in the art for an authentication system that is easy to configure and readily integrates with existing servers and clients.

### BRIEF SUMMARY

The invention is defined by the appended claims.

The present invention will be best understood by reference to the following detailed description when read in conjunction with the accompanying drawings.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is a block diagram illustrating an environment in which one aspect of the present invention may be implemented, including various interconnected servers and clients;
FIG. 2 is a flowchart illustrating a method for bi-directionally authenticating a client and a server in accordance with an aspect of the present invention;
FIG. 3 is a sequence diagram illustrating the exchange of data for authenticating the client and the server;
FIG. 4 is a sequence diagram illustrating the establishment of a Transport Layer Security (TLS) connection between the client and the server;
FIG. 5 is one embodiment of a digital certificate in accordance with an aspect of the present invention including various subparts thereof;
FIG. 6 is one embodiment of a response packet including a user certificate, a full requested URL, a token, and a server certificate;
FIGS. 7a-c is a flowchart illustrating the verification of the response packet;
FIG. 8 is a first exemplary configuration of the mutually authenticating client and server where the certificate and telephony servers are controlled by a third party provider;
FIG. 9 is a second exemplary configuration of the mutually authenticating client and server in which the certificate and telephony servers are controlled by an organization controlling the server; and
FIG. 10 is a third configuration of the mutually authenticating client and server where secure access to web services is provided.

Common reference numerals are used throughout the drawings and the detailed description to indicate the same elements.

### DETAILED DESCRIPTION

The detailed description set forth below in connection with the appended drawings is intended as a description of the presently preferred embodiment of the invention, and is not intended to represent the only form in which the present invention may be constructed or utilized. The description sets forth the functions and the sequence of steps for developing and operating the invention in connection with the illustrated embodiment. It is to be understood, however, that the same or equivalent functions and sequences may be accomplished by different embodiments that are also intended to be encompassed within the spirit and scope of the invention.

It is further understood that the use of relational terms such as first and second, and the like are used solely to distinguish one from another entity without necessarily requiring or implying any actual such relationship or order between such entities.

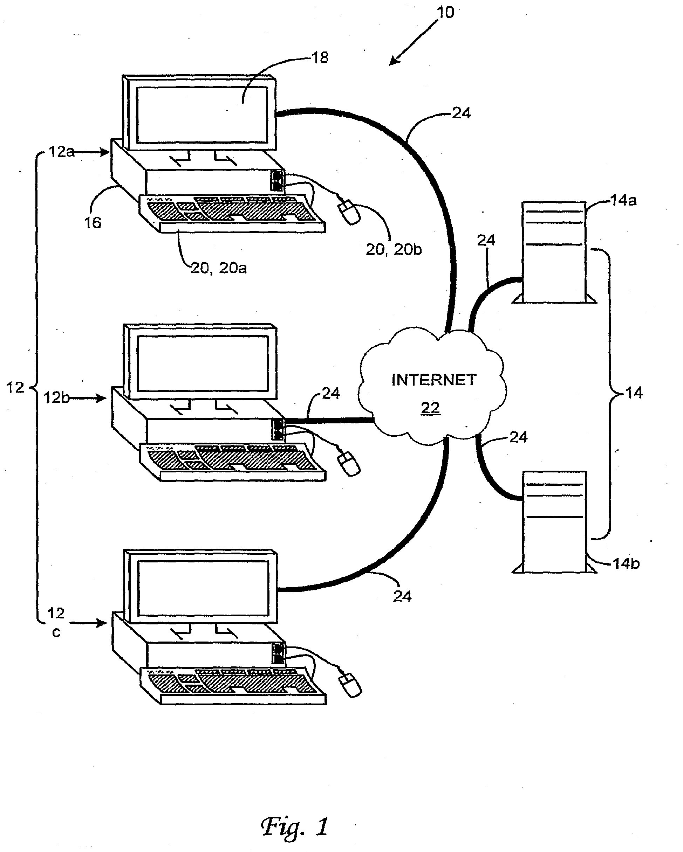

With reference to FIG. 1, an exemplary computer network 10 includes various data processing apparatuses or computers 12, 14. More particularly, the computers 12 may be personal computers or workstations that function as clients, and include a system unit 16 that houses a central processing unit, storage devices, and the like. The computers 12 may also include a display unit 18, and input devices 20 such as a keyboard 20a and a mouse 20b. It is understood that the system unit 16 receives various inputs from the input devices 20 that alter the control and flow of preprogrammed instructions being executed by the central processing unit, and the results of such execution are shown on the display unit 18. The computers 14 may be servers that provide data or services to the client computers 12. In this regard, the term "client" is understood to refer to the role of the computers 12 as a requestor of data or services, while the term "server" is understood to refer to the role of the servers 14 to provide such data or services. Additionally, it is possible that the computers 12 may request data or services in one transaction and provide data or services in a transaction, thus changing its role from client to server or vice versa.

The computers 12, 14 are connected to a wide area network such as the Internet 22 via network connections 24. Requests from the client computers 12 and requested data from the server computers 14 are delivered through the network connections 24. According to an embodiment of the present invention, the server computers 14 are web servers, and the client computers 12 include web browsing applications such as Microsoft Internet Explorer that visually renders documents provided by the server computers 14 on the display unit 18. It will be appreciated that the network topology shown in FIG. 1 is presented by way of example only and not of limitation, and any other type of local or wide area network may be readily substituted without departing from the scope of the present invention. It is understood that any well known data transmission protocol may be utilized for the network connections 24 and the internet 22.

As a further example, a first server computer 14a may be an electronic banking web server that provides account information and funds transfer functionality. Additional uses are also contemplated, where the first server computer 14a hosts a mail server, an online shopping site, or a Microsoft .NET application. A user on the first client computer 12a may log on to first server computer 14a to retrieve the account balance and transfer funds to a separate account using a web browser. In this exemplary context, one of the considerations of information security includes ensuring that the user on the first client computer 12a is who he asserts to be. For example, a malicious user on a second client computer 12b may have all of the credentials of the user on the first client computer 12a to log on to the first server computer 14a without recognizing that such access is fraudulent. Another consideration is ensuring that the first server computer 14a is under the control of a bank of which the user on the first client computer 12a is a customer. It may be possible that the second server computer 14b is masquerading as the first server computer 14a in a phishing attempt, and the first client computer 12a may have been misdirected to the second server computer 14b. Additionally, all legitimate data transfers between the first client computer 12a and the first server computer 14a must not be intercepted by any of the other computers, including a third client computer 12c, the second client computer 12b, and the second server computer 14b.

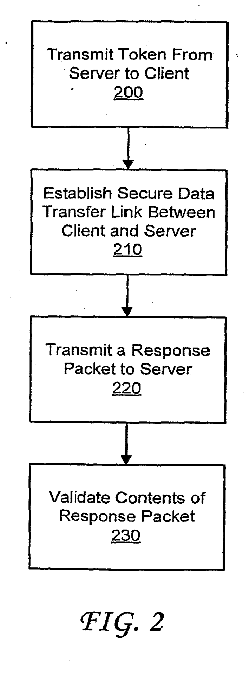

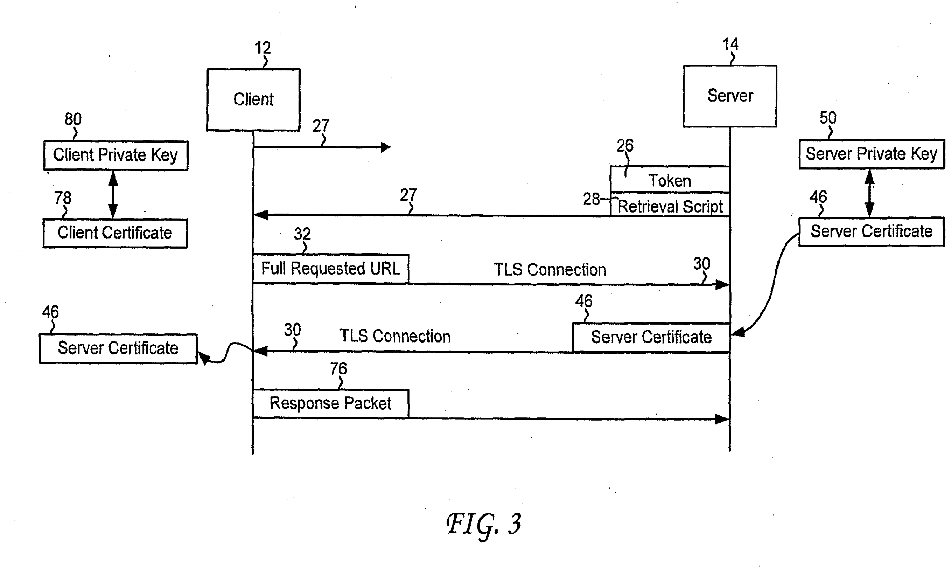

An aspect of the present invention relates to a method of mutually authenticating the client computer 12 and the server computer 14. With reference to the flowchart of FIG. 2 and additionally to the sequence diagram of FIG. 3, the method initiates with a step 200 of transmitting a token 26 from the client computer 12 to the server computer 14 over an unsecured data link 27. However, prior to the transmission of the token 26, there may be an additional step of the client computer 12 initiating the unsecured connection 27 with the server computer 14. For example, the user may input the network address of the server computer 14 into the browser application on the client computer 12, at which point a request is made for a file or page on the server computer 14. The token 26 is also referred to as a certificate request identifier, and contains a random value that identifies the particular request. As will be described in further detail below, the token 26 is maintained on the server computer 14 to ensure that only transactions referenced by the certificate request identifier are deemed valid. It is understood that the random value prevents replay attacks. According to one embodiment of the present invention, the token 26 is accompanied by a certificate retrieval script 28, which directs the browser to begin the process of authenticating the client computer .12.

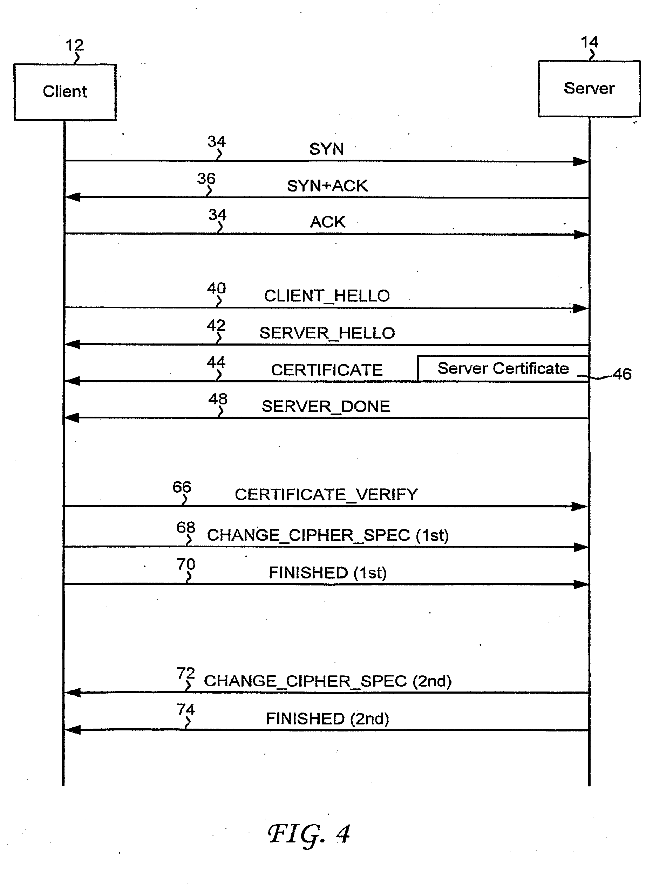

Thereafter, according to step 210, a secure data transfer link 30 is initiated by the client computer 12 utilizing a full requested Uniform Resource Locator (URL) 32. In accordance with a preferred embodiment, the secure data transfer link 30 is a symmetric TLS link. In further detail with reference to the sequence diagram of FIG. 4, the client computer 12 initiates a connection to the server computer 14 by transmitting a synchronize, or SYN packet 34. Thereafter, the server computer 14 transmits a synchronize and acknowledge, or SYN+ACK packet 36 to the client computer 12. Upon receipt, the client computer 12 re-sends an acknowledge, or ACK packet 38 to the server computer 14. As understood, the foregoing transmissions relate to the Transmission Control Protocol (TCP), a protocol layer underneath the TLS protocol.

Upon establishing a TCP connection between the client computer 12 and the server computer 14, a CLIENT_HELLO command 40 is sent from the client computer 12 to the server computer 14. This packet includes the highest version of TLS supported by the client computer 12, the ciphers and data compression methods supported by the client computer 12, a session identifier, and random data. Upon receipt of the CLIENT_HELLO command 40, the server computer 14 transmits a SERVER_HELLO command 42. The SERVER_HELLO command 42 includes the version of TLS, cipher, and data compression method that has been selected. Additionally, the previously set session identifier is included, as well as additional random data. Thereafter, the server computer 14 transmits the CERTIFICATE command 44, which includes a server certificate 46, and a SERVER_DONE command 48, which indicates that the server computer 14 has completed this handshaking phase.

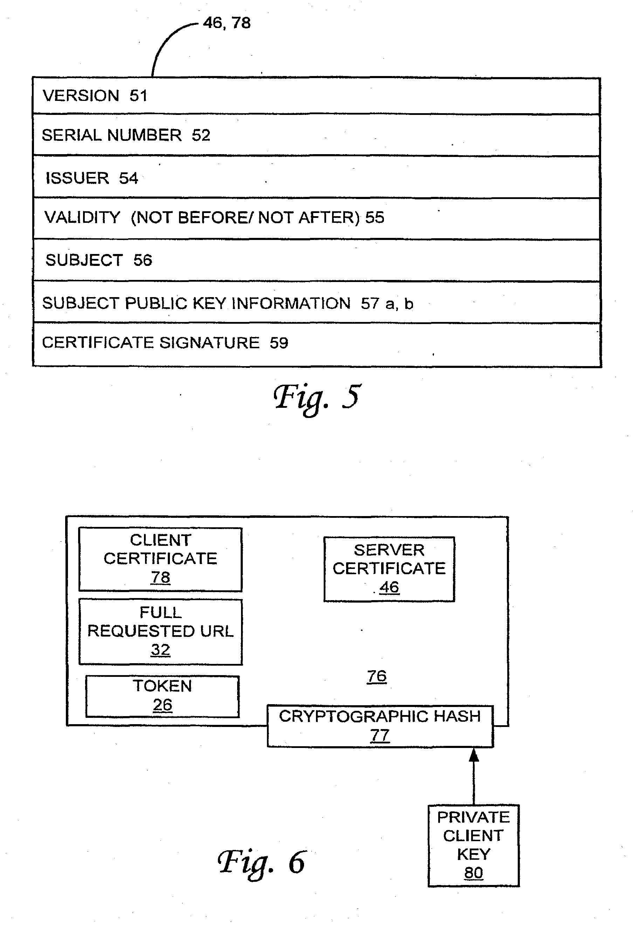

The server certificate 46 is understood to be in conformance with the X.509 standard. More particularly, with reference to FIG. 5, the data stored in the server certificate 46 includes a version number 51, a serial number 52, an issuer identifier 54, a validity identifier 55, a subject public key information 57 including a public key algorithm identifier 57a and a subject public key 57b, and a certificate signature 59. The version number 51 identifies the version of the X.509 standard being used for the particular certificate, while the serial number 52 is a unique number assigned by a particular CA. The issuer identifier 54 includes the name of the CA that issued the certificate, and a validity identifier 55 includes a validity date range with earlier and later limits. The subject identifier 56 contains the name of a person, group, or organization to which the certificate was issued. The subject public key algorithm identifier 57a denotes the algorithm used to generate the subject public key 57b, and the subject public key 57b contains the public key associated with the certificate. The certificate signature 59 contains a signature as generated by the CA. As further understood, the server certificate 46 includes a corresponding server private key 50.

After verifying the authenticity of the sever certificate 46, the client computer 12 transmits a CERTIFICATE_VERIFY command 66. Additionally, the client computer 12 transmits a first CHANGE_CIPHER SPEC command 68, followed immediately by a first FINISHED command 70. This indicates that the contents of subsequent TLS record data sent by the client computer 12 during the current session will be encrypted. It is understood that the first FINISHED command 70 includes a digest of all handshake commands previously transmitted to ensure that no alteration occurred. Next, the server computer 14 transmits a second CHANGE_CIPHER_SPEC command 72, followed immediately by a second FINISHED command 74. Like the first CHANGE_CIPHER_SPEC command 68, the second CHANGE_CIPHER SPEC command 72 indicates that subsequent TLS record data sent by the server computer 14 during the current session will be encrypted. The second FINISHED command 74 includes all prior handshake commands from the server computer 14 to the client computer 12. The client computer 12 transmits a generated symmetric key that is encrypted with the subject public key 57b in the server certificate 46. The server private key 50 is used to decrypt to the symmetric key upon receipt by the server computer 14, and subsequent transmissions to the client computer 12 will be encrypted therewith.

As indicated above, the client computer 12 securely retrieves the server certificate 46 in accordance with an aspect of the present invention. Specifically, according to the process of establishing the TLS connection 30 between the client computer 12 and the server computer 14, the server certificate 46 is transmitted. In one embodiment, the client computer 12 stores the server certificate 46 for use outside the context of the TLS connection 30, as will be detailed further below.

Referring back to FIGS. 2 and 3, the method for mutually authenticating the client computer 12 and the server computer 14 continues with a step 220 of transmitting a response packet 76 to the server computer 14. In further detail as shown in FIG. 6, the response packet 76 is comprised of the full requested URL 32, the token 36, the server certificate 46, and a client certificate 78. The structure of the client certificate 78 is identical to that of the server certificate 46, and as shown in FIG. 5, includes the version 51, the serial number 52, the issuer 54, the validity identifier 55, the subject identifier 56, the subject public key information 57a,b, and the certificate signature 59. According to one embodiment of the present invention, the Microsoft CryptoAPI libraries are utilized to retrieve the client certificate 78 from a certificate storage location. Like the server certificate 46, the client certificate 78 also has a corresponding private key, a client private key 80. The response packet 76 includes an additional authentication identifier correlated to the private client key 80. According to one embodiment of the present invention, such authentication identifier is a cryptographic hash 77 of the contents of the response packet 76. By way of example only and not of limitation, the Message Digest Algorithm-2 (MD2) hash function is used, though any other hash function such as Message Digest Algorithm-5 (MD5), Secure Hash Algorithm (SHA) or the like may be substituted without departing from the scope of the present invention. The resulting cryptographic hash 77 is signed with the private client key 80

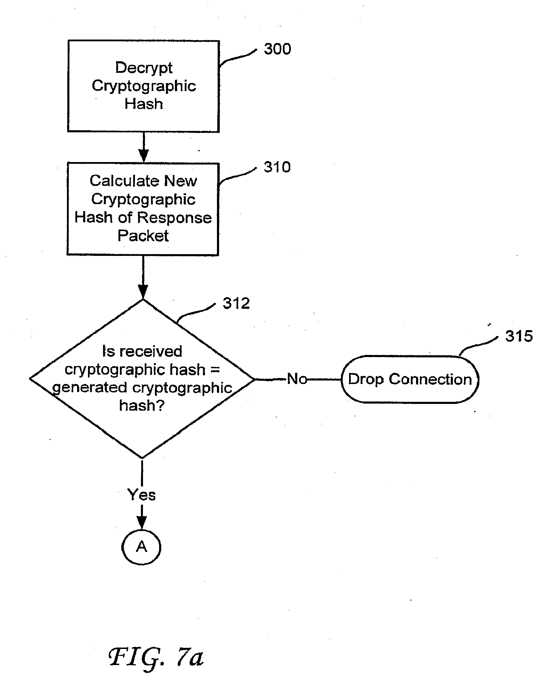

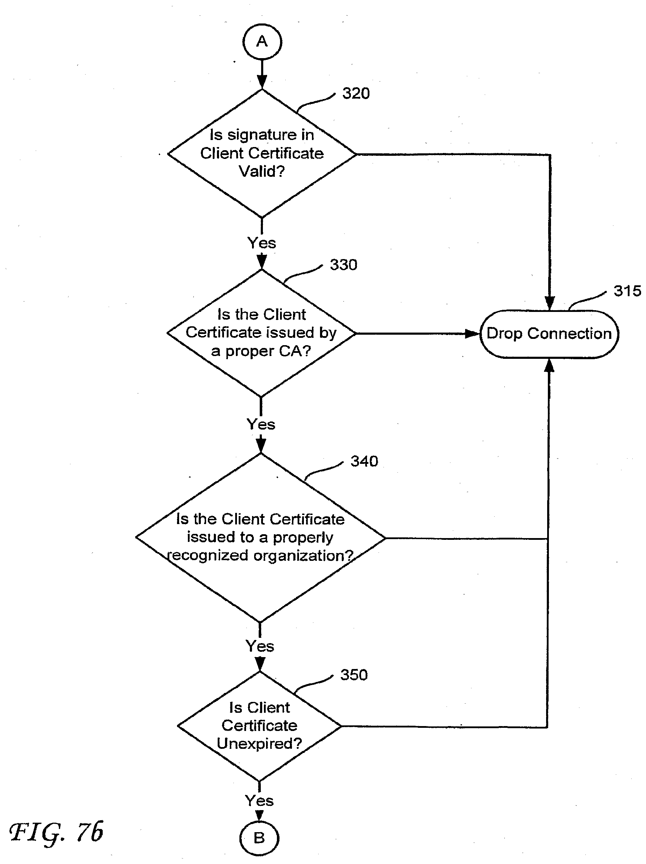

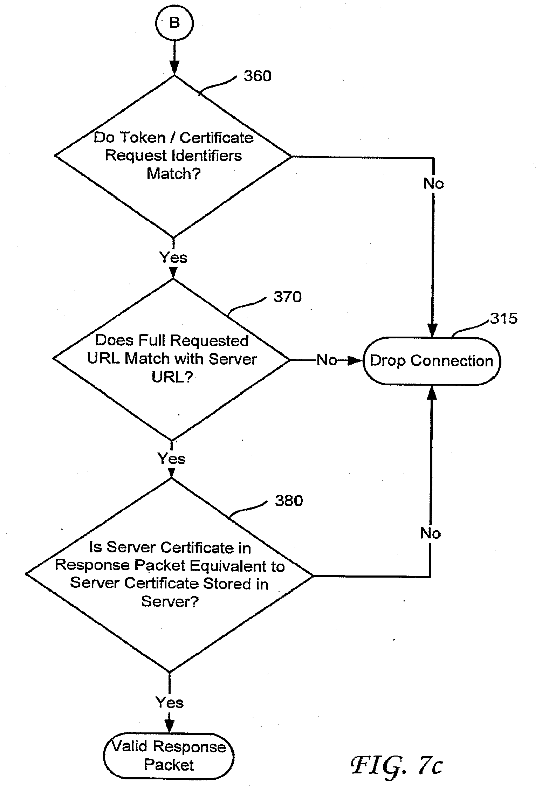

According to step 230, the method further includes validating the contents of the response packet 76. First, the authenticity of the response packet 76 itself is verified. As indicated above, the response packet 76 includes the cryptographic hash 77 that has been signed with the private client key 80. With reference to the flowchart of FIGS. 7a-7c, according to step 300, the client-side cryptographic hash 77a is decrypted using the client certificate 78. A server-side cryptographic hash is computed for the response packet 76 as existing on the server 14. The server-side cryptographic hash is compared against the client-side cryptographic hash 77 accompanying the response packet 76 per comparison step 312. If the values do not match, then the response packet 76 is deemed to have been tampered with, and any connections are terminated as in step 315. If the values match, further verification of the contents of the response packet 76 continues as will be described below.

Such further verification includes comparing the constituent parts of the response packet 76 with known copies thereof. First, the signature of the client certificate 78 is validated per step 320, where the subject public key information 57b is verified. Thereafter, the certificate signature 59 and the issuer identifier 54 are examined to confirm that a properly recognized CA has signed the client certificate 78 per step 330. The subject identifier 56 is also examined to confirm that the client certificate 78 was issued to a properly recognized organization according to step 340. According to one embodiment, a properly recognized organization refers to a legitimate organization having control over the server computer 14. Additionally, the client certificate 78 is confirmed to be valid and unexpired by comparing the validity identifier 55 of the client certificate 78 against the current date per step 350. If any of the foregoing validation step fails, the client certificate 78 is deemed to have been tampered with, and drops the connection per step 315.

The remaining components in the response packet 76 is also verified, including the full requested URL 32, the token 26, and the server certificate 46. As described above, the token 26, or the certificate request identifier is stored in the server computer 14. Per step 360, such stored value of the token 26 is compared against value of the token 26 in the response packet 76. It is understood that matching values confirms that no replay attacks are taking place. With respect to the full requested URL 32 in step 370 the value thereof is verified against the actual URL of the server computer 14. This is understood to verify that no phishing attacks are taking place that redirect the client computer 12 to a malicious server. With respect to the server certificate 46 included in the response packet 76, per step 380 it is compared against the server certificate 46 residing on the server computer 14. This prevents man-in-the-middle attacks, as a different server certificate 46 from the one stored on the server computer 14 as opposed to the one being returned via the response packet 76. Along these lines, if any of the foregoing verifications fails, the connection between the server computer 14 and the client computer 12 is immediately broken, and no further access to the server computer 14 is permitted. If there are no anomalies, however, the client computer 12 is authenticated and continues to access the server computer 14. As will be appreciated, the foregoing verifications discover one or more security breaches.

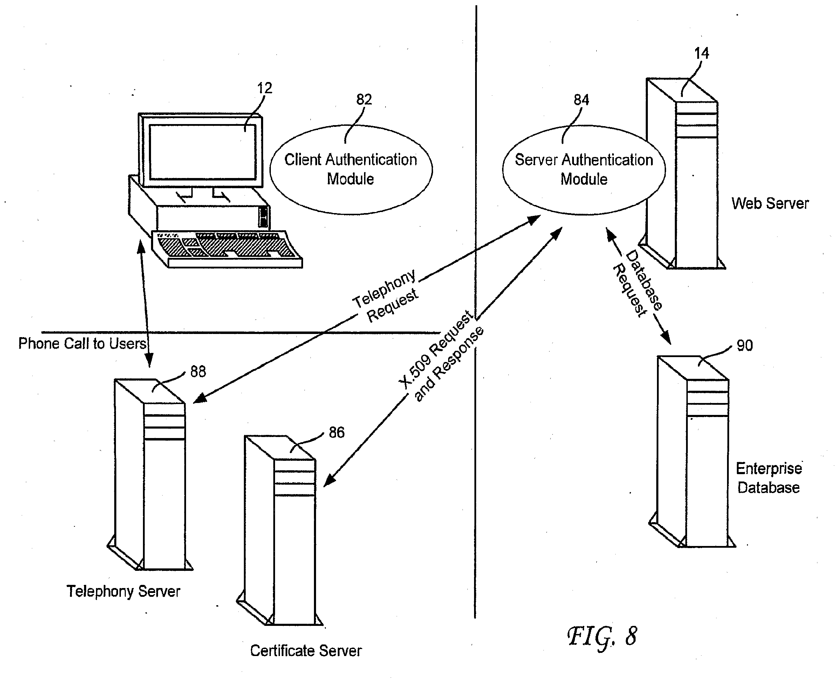

With reference to FIG. 8, according to another aspect of the present invention, the client computer 12 includes a client authentication module 82, and the server computer 14 includes a server authentication module 84. The client authentication module 82 is understood to handle the processes on the client side as discussed above, including retrieval of the token 26, the script 28, the server certificate 46, and the client certificate 78, as well as the transmitting of the response packet 76 after signing the same with the private client key 80. According to one embodiment, the client authentication module 82 is an Active-X component that is installed with a single user interaction via the web browser on the client computer 12. However, alternative executable components that may be added on to the browser are also deemed to be within the scope of the present invention. The server authentication module 84 is understood to handle the processes on the server side as discussed above, including transmission of the token 26 and the server certificate 46, as well as the validation of the received response packet 76. Thus, the client authentication module 82 and the server authentication module 84 communicate with each other, and together implement an X.509 authentication scheme without the deployment of client-side TLS.

It will be appreciated that the aforementioned method presupposes that a client certificate 78 and a corresponding private client key 80 already exist on the client computer 12. The server authentication module 84 may determine whether or not the client certificate 78 exists on the client computer 12, and if not, the server authentication module 84 alerts a certificate server 86. Prior to issuing a client certificate and a private client key to the client computer 12, the user associated therewith is authenticated via an out-of-band modality. According to one embodiment, the server authentication module 84 notifies a telephony server 88 to deliver a one-time password to a cellular phone or a landline phone under the control of the user. Alternatively, an e-mail or a Short Message Service (SMS) text message may be sent. Other out-of-band authentication techniques are contemplated, such as voice recognition, IP address verification, and the like. The entry of the one-time password may be handled through the server computer 14 with the server authentication module 84. In lieu of, or in addition to the foregoing out-of-band authentication, the user may be presented with an additional knowledge-based authentication. For example, the user may be asked about their favorite color, the high school they attended, and other similar questions.

Upon supplying the correct response, the server authentication module 84 directs the certificate server 86 to generate a private client key and a corresponding client certificate, and store it on the client computer 12. The additional authentication information may be stored in an enterprise database 90 for later retrieval and use by the server authentication module 84. It is understood that the foregoing procedure "registers" the browser on the client computer system 12 with the server computer 14, effectively making such browser a second authentication factor ("Something the user has").

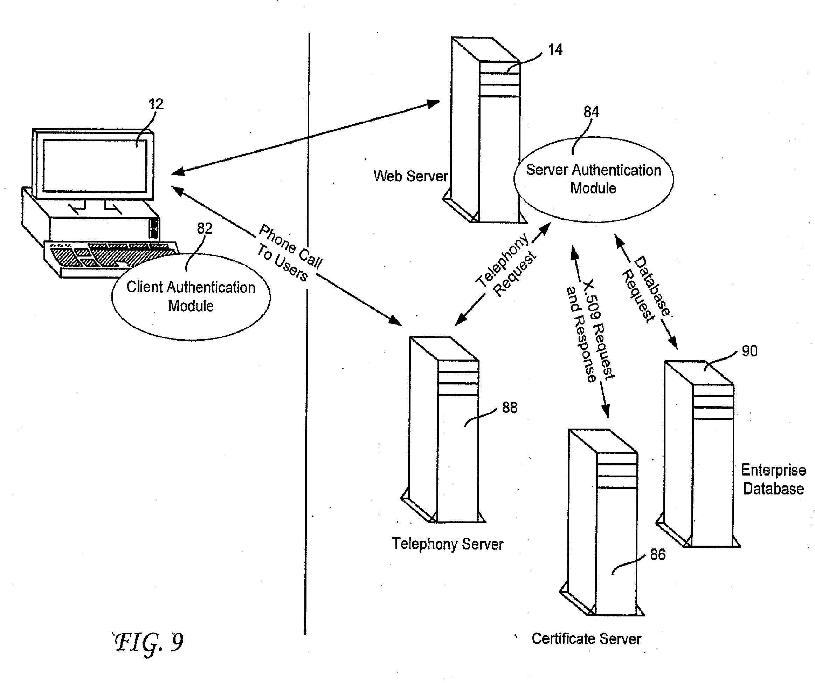

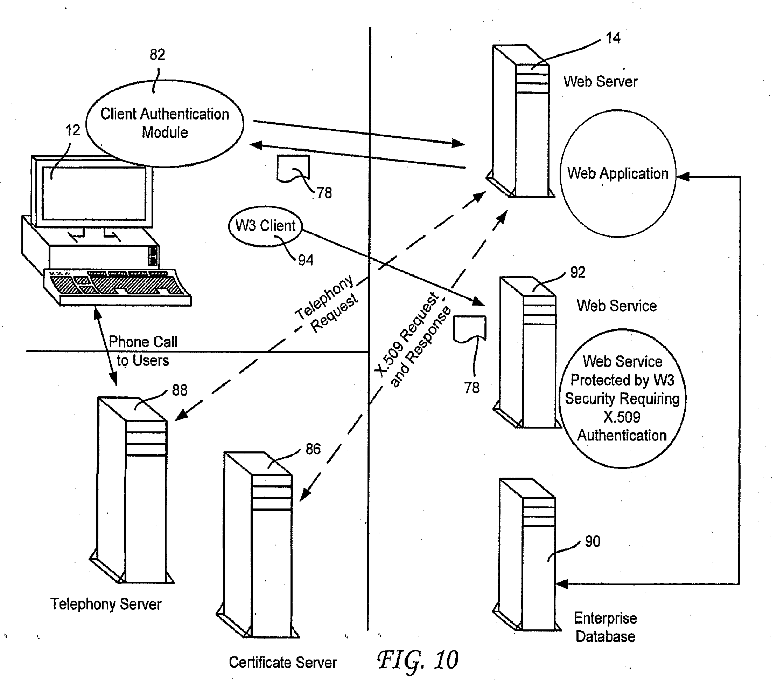

As indicated above, the issuer identifier 54 is examined to confirm that a properly recognized CA has issued and signed the client certificate 78. According to the embodiment shown in FIG. 8, the certificate server 86 is the CA, and is understood to be within the control of a legitimate third party provider separate from the organization managing the server computer 14 and the enterprise database 90. In an alternative configuration shown in FIG. 9, the certificate server 86 and the telephony server 88 are managed and maintained by the same organization managing the server computer 14. In yet another configuration shown in FIG. 10, secure access is being enabled for web services 92. As understood, the term web service 92 refers to a standardized system for supporting machine to machine interaction. In this case, the client computer 12 utilizes the client authentication module 82 to authenticate with the server computer 14. The client certificate 78 thus generated is utilized to authenticate a W3 client to authenticate with the web service 92 via the client certificate 78.

In addition to the foregoing configurations, it is expressly contemplated that the client authentication module 82 and the server authentication module 84 may be integrated into a wide variety of applications requiring bi-directional authentication. By way of example only and not of limitation, these include .NET forms authentication in .NET applications, Microsoft Outlook Web Access, and Microsoft Sharepoint, as well as any other system with enforcement points that require proper client and server authentication.

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show any more detail than is necessary for the fundamental understanding of the present invention, the description taken with the drawings making apparent to those skilled in the art how the several forms of the present invention may be embodied in practice.

## Claims

1. A method for mutually authenticating a client and a server, the method comprising:
transmitting, over a first connection, a token including a unique identifier, said token signed with a private key associated with a server certificate;
receiving a first response to transmitting the token, the first response comprising a request to initiate a secure data transfer link over a second connection, the second connection being distinct from the first connection;
transmitting the server certificate and a Uniform Resource Locator (URL) identifier over the second connection;
in response to transmitting the server certificate and the Uniform Resource Locater (URL) identifier over the second connection, receiving a second response over the first connection comprising an authenticity identifier corresponding to a second private key associated with a second certificate distinct from the server certificate; and
validating the second response ;
said method performed by a computing system that comprises one or more computing devices.

2. The method of Claim 1, wherein the authenticity identifier comprises a cryptographic hash of the second response, the authenticity identifier being signed with the second private key;

3. The method of claim 2; wherein the second response further comprises the server certificate as transmitted over the second connection; and wherein validating the second response further includes validating the server certificate in the second response against a stored server certificate.

4. The method of Claim 2, wherein the second response further comprises the URL identifier; and wherein validating the second response includes validating:
• the received URL identifier in the second response against a URL associated with an authentication process.

5. The method of claim 2, wherein the second response further comprises the token, and wherein validating the second response includes validating the token in the second response against a stored token.

6. The method of Claim 2, wherein validating the response further includes validating the second certificate against the authenticity identifier.

7. The method of Claim 2, wherein:
• The second response comprises a response packet.

8. The method of Claim 6, further wherein the second certificate is unexpired; or the second certificate is issued to an organization associated with the server and prior to issuing the second certificate, the method further includes validating the client with a challenge-response sequence.

9. The method of Claim 8, wherein a response to the challenge-response sequence is transmitted:
• to a predetermined telephone device associated with a user; or.
• to a predetermined e-mail address associated with a user.

10. A method for authenticating an identity to a server comprising one or more computing devices, the method comprising:
• receiving from the server over a first connection, a token including a unique session identifier, said token signed with a private key associated with a server certificate;
• establishing a secure data transfer link to the server over a second connection in response to receiving the token, the second connection being distinct from the first connection;
• receiving the server certificate and a Uniform Resource Locator (URL) identifier over the second connection; and
• In response to receiving the server certificate and the URL identifier over the second connection; transmitting a response over the first connection comprising an authenticity identifier corresponding to a second private key, the second private key being associated with a second certificate distinct from the server certificate.

11. The method of Claim 10, wherein:
• the authenticity identifier comprises a cryptographic hash of the response, the authenticity identifier being signed with the private key;

12. The method of claim 10, wherein the second certificate is issued from a certificate server associated with an authorized certification authority and the second certificate is linked to an organization associated with the server.

13. The method of Claim 10, wherein prior to issuing the second certificate, the method further includes validating the identity with a challenge-response sequence; preferably the challenge-response sequence comprises a response that is transmitted to a predetermined telephone device associated with the identity; or wherein the challenge-response sequence comprises a response that is transmitted to a predetermined e-mail address associated with the identity.

14. A system for authenticating an identity, the system comprising:
a computing system comprising one or more computing devices, said computing system programmed via executable instructions to at least:
transmit a token to a second computing system over a first connection, the token including a unique session identifier, said token signed with a private key associated with a server certificate;
establish a secure data transfer link over a second connection at least partly in response to a request from the second computing system, wherein establishing the secure data transfer link comprises transmitting to the second computing system the server certificate and a Uniform Resource Locator (URL) identifier;
receive from the second computing system a response over the first connection, the response comprising an authenticity identifier corresponding to a second private key associated with a second certificate distinct from the server certificate; and
validate the response.

15. The system of Claim 14, wherein the authenticity identifier comprises a cryptographic hash of the response, the authenticity identifier being signed with the second private key; or
wherein the response further comprises the URL identifier, and wherein validating the response further includes validating the URL identifier in the response against a URL associated with the one or more computing devices; or
wherein the response further comprises the token, and wherein validating the response further includes validating the token in the response against a token stored by the one or more computing devices.

16. The system of Claim 15, further comprising:
a certificate server including an authentication module operative to issue the certificate to the identity; or a telephony server for transmitting to an out-of-band device a response for a challenge-response sequence presented to the identity by the server.

17. An article of manufacture comprising a program storage medium readable by a computer, the medium tangibly embodying one or more programs of instructions executable by the computer to perform a method for mutually authenticating a client and a server, the method comprising:
transmitting, over a first connection, a token including a unique identifier, said token signed with a private key associated with a server certificate;
receiving a first response to transmitting the token, the first response comprising a request to initiate a secure data transfer link over a second connection, the second connection being distinct from the first connection;
transmitting the server certificate and a Uniform Resource Locator (URL) identifier over the second connection;
in response to transmitting the server certificate and the Uniform Resource Locater (URL) identifier over the second connection, receiving a second response over the first connection comprising as authenticity identifier corresponding to a second private key associated with a second certificate distinct from the server certificate; and
validating the second response;
said method performed by a computing system that comprises one or more computing devices.

## Patentansprüche

1. Verfahren zum gegenseitigen Authentifizieren eines Clients und eines Servers, wobei das Verfahren umfasst:
Senden eines Tokens, das eine eindeutige Kennung enthält, über eine erste Verbindung, wobei das genannte Token mit einem privaten Schlüssel, dem ein Serverzertifikat zugeordnet ist, signiert ist;
Empfangen einer ersten Antwort auf das Senden des Tokens, wobei die erste Antwort eine Anforderung zum Initiieren eines sicheren Datenübertragungsabschnitts über eine zweite Verbindung umfasst, wobei die zweite Verbindung von der ersten Verbindung verschieden ist;
Senden des Serverzertifikats und einer Uniform-Resource-Locator-Kennung (URL-Kennung) über die zweite Verbindung;
Empfangen einer zweiten Antwort über die erste Verbindung, die eine Authentizitätskennung umfasst, die einem zweiten privaten Schlüssel entspricht, der einem zweiten Zertifikat, das von dem Serverzertifikat verschieden ist, zugeordnet ist, als Reaktion auf das Senden des Serverzertifikats und der Uniform-Resource-Locator-Kennung (URL-Kennung) über die zweite Verbindung; und
Validieren der zweiten Antwort;
wobei das genannte Verfahren durch ein Computersystem ausgeführt wird, das eine oder mehrere Computervorrichtungen umfasst.

2. Verfahren gemäß Anspruch 1, wobei die Authentizitätskennung einen kryptografischen Hash-Wert der zweiten Antwort umfasst, wobei die Authentizitätskennung mit dem zweiten privaten Schlüssel signiert ist.

3. Verfahren gemäß Anspruch 2, wobei die zweite Antwort ferner das Serverzertifikat, wie es über die zweite Verbindung übertragen wird, umfasst; und wobei das Validieren der zweiten Antwort ferner das Validieren des Serverzertifikats in der zweiten Antwort gegenüber einem gespeicherten Serverzertifikat enthält.

4. Verfahren gemäß Anspruch 2, wobei die zweite Antwort ferner die URL-Kennung umfasst; und wobei das Validieren der zweiten Antwort das Validieren enthält:
• der empfangenen URL-Kennung in der zweiten Antwort gegenüber einer URL, die einem Authentifizierungsprozess zugeordnet ist.

5. Verfahren gemäß Anspruch 2, wobei die zweite Antwort ferner das Token umfasst und wobei das Validieren der zweiten Antwort das Validieren des Tokens in der zweiten Antwort gegenüber einem gespeicherten Token enthält.

6. Verfahren gemäß Anspruch 2, wobei das Validieren der Antwort ferner das Validieren des zweiten Zertifikats gegenüber der Authentizitätskennung enthält.

7. Verfahren gemäß Anspruch 2, wobei:
• die zweite Antwort ein Antwortpaket umfasst.

8. Verfahren gemäß Anspruch 6, wobei das zweite Zertifikat ferner nicht abgelaufen ist; oder wobei das zweite Zertifikat an eine dem Server zugeordnete Organisation ausgegeben wird und wobei das Verfahren vor dem Ausgeben des zweiten Zertifikats ferner das Validieren des Clients mit einer Challenge-Response-Sequenz enthält.

9. Verfahren gemäß Anspruch 8, wobei eine Antwort auf die Challenge-Response-Sequenz gesendet wird:
• an eine vorgegebene Telefonvorrichtung, die einem Nutzer zugeordnet ist; oder
• an eine vorgegebene E-Mail-Adresse, die einem Nutzer zugeordnet ist.

10. Verfahren zum Authentifizieren einer Identität für einen Server, der eine oder mehrere Computervorrichtungen umfasst, wobei das Verfahren umfasst:
• Empfangen eines Tokens, das eine eindeutige Sitzungskennung enthält, von dem Server über eine erste Verbindung, wobei das genannte Token mit einem einem Serverzertifikat zugeordneten privaten Schlüssel signiert ist;
• Aufbauen eines sicheren Datenübertragungsabschnitts zu dem Server über eine zweite Verbindung als Reaktion auf den Empfang des Tokens, wobei die zweite Verbindung von der ersten Verbindung verschieden ist;
• Empfangen des Serverzertifikats und einer Uniform-Resource-Locator-Kennung (URL-Kennung) über die zweite Verbindung; und
• Senden einer Antwort über die erste Verbindung, die eine Authentizitätskennung, die einem zweiten privaten Schlüssel entspricht, umfasst, als Reaktion auf den Empfang des Serverzertifikats und der URL-Kennung über die zweite Verbindung, wobei der zweite Schlüssel einem zweiten Zertifikat, das von dem Serverzertifikat verschieden ist, zugeordnet ist.

11. Verfahren gemäß Anspruch 10, wobei
• die Authentizitätskennung einen kryptografischen Hash-Wert der Antwort umfasst, wobei die Authentizitätskennung mit dem privaten Schlüssel signiert ist.

12. Verfahren gemäß Anspruch 10, wobei das zweite Zertifikat von einem Zertifikatserver ausgegeben wird, der einer berechtigten Zertifizierungsinstanz zugeordnet ist, und wobei das zweite Zertifikat mit einer dem Server zugeordneten Organisation verknüpft ist.

13. Verfahren gemäß Anspruch 10, wobei das Verfahren vor dem Ausgeben des zweiten Zertifikats ferner das Validieren der Identität mit einer Challenge-Response-Sequenz enthält; wobei die Challenge-Response-Sequenz vorzugsweise eine Antwort umfasst, die an eine vorgegebene Telefonvorrichtung, die der Identität zugeordnet ist, übertragen wird; oder wobei die Challenge-Response-Sequenz eine Antwort umfasst, die an eine vorgegebene E-Mail-Adresse, die der Identität zugeordnet ist, übertragen wird.

14. System zum Authentifizieren einer Identität, wobei das System umfasst:
ein Computersystem, das eine oder mehrere Computervorrichtungen umfasst, wobei das genannte Computersystem über ausführbare Anweisungen programmiert ist, um wenigstens:
ein Token über eine erste Verbindung an ein zweites Computersystem zu senden, wobei das Token eine eindeutige Sitzungskennung enthält, wobei das genannte Token mit einem einem Serverzertifikat zugeordneten privaten Schlüssel signiert ist;
Aufbauen eines sicheren Datenübertragungsabschnitts über eine zweite Verbindung wenigstens teilweise als Reaktion auf eine Anforderung von dem zweiten Computersystem, wobei das Aufbauen des sicheren Datenübertragungsabschnitts das Senden des Serverzertifikats und einer Uniform-Resource-Locator-Kennung (URL-Kennung) an das zweite Computersystem umfasst;
Empfangen einer Antwort über die erste Verbindung von dem zweiten Computersystem, wobei die Antwort eine Authentizitätskennung umfasst, die einem zweiten privaten Schlüssel entspricht, der einem zweiten Zertifikat, das von dem Serverzertifikat verschieden ist, zugeordnet ist; und
Validieren der Antwort.

15. System gemäß Anspruch 14, wobei die Authentizitätskennung einen kryptografischen Hash-Wert der Antwort umfasst, wobei die Authentizitätskennung mit dem zweiten privaten Schlüssel signiert ist; oder
wobei die Antwort ferner die URL-Kennung umfasst, und wobei das Validieren der Antwort ferner das Validieren der URL-Kennung in der Antwort gegenüber einer der einen oder den mehreren Computervorrichtungen zugeordneten URL enthält; oder
wobei die Antwort ferner das Token umfasst und wobei das Validieren der Antwort ferner das Validieren des Tokens in der Antwort gegenüber einem durch eine oder mehrere Computervorrichtungen gespeicherten Token enthält.

16. System gemäß Anspruch 15, das ferner umfasst:
einen Zertifikatserver, der ein Authentifizierungsmodul, das dafür betreibbar ist, das Zertifikat an die Identität auszugeben; oder einen Telefonserver zum Senden einer Antwort für eine Challenge-Response-Sequenz, die durch den Server an die Identität übergeben wird, an eine Außerbandvorrichtung enthält.

17. Herstellungsartikel, der ein Programmspeichermedium umfasst, das durch einen Computer lesbar ist, wobei das Medium ein oder mehrere Programme von Anweisungen, die durch den Computer ausführbar sind, um ein Verfahren zum gegenseitigen Authentifizieren eines Clients und eines Servers auszuführen, konkret verkörpert, wobei das Verfahren umfasst:
Senden eines Tokens, das eine eindeutige Kennung enthält, über eine erste Verbindung, wobei das genannte Token mit einem privaten Schlüssel, dem ein Serverzertifikat zugeordnet ist, signiert ist;
Empfangen einer ersten Antwort auf das Senden des Tokens, wobei die erste Antwort eine Anforderung zum Initiieren eines sicheren Datenübertragungsabschnitts über eine zweite Verbindung umfasst, wobei die zweite Verbindung von der ersten Verbindung verschieden ist;
Senden des Serverzertifikats und einer Uniform-Resource-Locator-Kennung (URL-Kennung) über die zweite Verbindung;
Empfangen einer zweiten Antwort über die erste Verbindung, die eine Authentizitätskennung umfasst, die einem zweiten privaten Schlüssel entspricht, der einem zweiten Zertifikat, das von dem Serverzertifikat verschieden ist, zugeordnet ist, als Reaktion auf das Senden des Serverzertifikats und der Uniform-Resource-Locator-Kennung (URL-Kennung) über die zweite Verbindung; und
Validieren der zweiten Antwort;
wobei das genannte Verfahren durch ein Computersystem ausgeführt wird, das eine oder mehrere Computervorrichtungen umfasst.

## Revendications

1. Procédé pour authentifier mutuellement un client et un serveur, le procédé comprenant :
la transmission, sur une première connexion, d'un jeton comprenant un identificateur unique, ledit jeton étant signé avec une clé privée associée à un certificat de serveur ;
la réception d'une première réponse à la transmission du jeton, la première réponse comprenant une demande pour établir une liaison de transfert de données sécurisée sur une deuxième connexion, la deuxième connexion étant distincte de la première connexion ;
la transmission du certificat de serveur et d'un identificateur de localisateur universel de ressources (URL) sur la deuxième connexion ;
en réponse à la transmission du certificat de serveur et de l'identificateur de localisateur universel de ressources (URL) sur la deuxième connexion, la réception d'une deuxième réponse sur la première connexion comprenant un identificateur d'authenticité correspondant à une deuxième clé privée associée à un deuxième certificat distinct du certificat de serveur ; et
la validation de la deuxième réponse ;
ledit procédé étant effectué par un système informatique qui comprend un ou plusieurs dispositifs informatiques.

2. Procédé selon la revendication 1, dans lequel l'identificateur d'authenticité comprend un hachage cryptographique de la deuxième réponse, l'identificateur d'authenticité étant signé avec la deuxième clé privée.

3. Procédé selon la revendication 2, dans lequel la deuxième réponse comprend en outre le certificat de serveur tel que transmis sur la deuxième connexion ; et dans lequel la validation de la deuxième réponse comprend en outre la validation du certificat de serveur dans la deuxième réponse par rapport à un certificat de serveur stocké.

4. Procédé selon la revendication 2, dans lequel la deuxième réponse comprend en outre l'identificateur URL ; et dans lequel la validation de la deuxième réponse comprend la validation :
- de l'identificateur URL reçu dans la deuxième réponse par rapport à un URL associé à un processus d'identification.

5. Procédé selon la revendication 2, dans lequel la deuxième réponse comprend en outre le jeton, et dans lequel la validation de la deuxième réponse comprend la validation du jeton dans la deuxième réponse par rapport à un jeton stocké.

6. Procédé selon la revendication 2, dans lequel la validation de la réponse comprend en outre la validation du deuxième certificat par rapport à l'identificateur d'authenticité.

7. Procédé selon la revendication 2, dans lequel :
- la deuxième réponse comprend un paquet de réponse.

8. Procédé selon la revendication 6, dans lequel en outre le deuxième certificat est non expiré ; ou le deuxième certificat est délivré à une organisation associée au serveur et, avant d'émettre le deuxième certificat, le procédé comprend en outre la validation du client avec une séquence de question et réponse.

9. Procédé selon la revendication 8, dans lequel une réponse de la séquence de question et réponse est transmise :
- à un dispositif de téléphone prédéterminé associé à un utilisateur ; ou
- à une adresse de courrier électronique prédéterminée associée à un utilisateur.

10. Procédé pour authentifier une identité pour un serveur comprenant un ou plusieurs dispositifs informatiques, le procédé comprenant :
- la réception, à partir du serveur sur une première connexion, d'un jeton comprenant un identificateur de session unique, ledit jeton étant signé avec une clé privée associée à un certificat de serveur ;
- l'établissement d'une liaison de transfert de données sécurisée avec le serveur sur une deuxième connexion en réponse à la réception du jeton, la deuxième connexion étant distincte de la première connexion ;
- la réception du certificat de serveur et d'un identificateur de localisateur universel de ressources (URL) sur la deuxième connexion ; et
- en réponse à la réception du certificat de serveur et de l'identificateur URL sur la deuxième connexion ; la transmission d'une réponse sur la première connexion comprenant un identificateur d'authenticité correspondant à une deuxième clé privée, la deuxième clé privée étant associée à un deuxième certificat distinct du certificat de serveur.

11. Procédé selon la revendication 10, dans lequel :
- l'identificateur d'authenticité comprend un hachage cryptographique de la réponse, l'identificateur d'authenticité étant signé avec la clé privée.

12. Procédé selon la revendication 10, dans lequel le deuxième certificat est émis à partir d'un serveur de certificat associé à une autorité de certification autorisée et le deuxième certificat est lié à une organisation associée au serveur.

13. Procédé selon la revendication 10, dans lequel, avant d'émettre le deuxième certificat, le procédé comprend en outre la validation de l'identité avec une séquence de question et réponse ; de préférence, la séquence de question et réponse comprend une réponse qui est transmise à un dispositif de téléphone prédéterminé associé à l'identité ; ou dans lequel la séquence de question et réponse comprend une réponse qui est transmise à une adresse de courrier électronique prédéterminée associée à l'identité.

14. Système pour authentifier une identité, le système comprenant :
un système informatique comprenant un ou plusieurs dispositifs informatiques, ledit système informatique étant programmé par le biais d'instructions exécutables pour au moins :
transmettre un jeton à un deuxième système informatique sur une première connexion, le jeton comprenant un identificateur de session unique, ledit jeton étant signé avec une clé privée associée à un certificat de serveur ;
établir une liaison de transfert de données sécurisée sur une deuxième connexion au moins en partie en réponse à une demande provenant du deuxième système informatique, dans lequel l'établissement de la liaison de transfert de données sécurisée comprend la transmission au deuxième système informatique du certificat de serveur et d'un identificateur de localisateur universel de ressources (URL) ;
recevoir à partir du deuxième système informatique une réponse sur la première connexion, la réponse comprenant un identificateur d'authenticité correspondant à une deuxième clé privée associée à un deuxième certificat distinct du certificat de serveur ; et
valider la réponse.

15. Système selon la revendication 14, dans lequel l'identificateur d'authenticité comprend un hachage cryptographique de la réponse, l'identificateur d'authenticité étant signé avec la deuxième clé privée ; ou dans lequel la réponse comprend en outre l'identificateur URL, et dans lequel la validation de la réponse comprend en outre la validation de l'identificateur URL dans la réponse par rapport à un URL associé aux un ou plusieurs dispositifs informatiques ; ou
dans lequel la réponse comprend en outre le jeton, et dans lequel la validation de la réponse comprend en outre la validation du jeton dans la réponse par rapport à un jeton stocké par les un ou plusieurs dispositifs informatiques.

16. Système selon la revendication 15, comprenant en outre :
un serveur de certificat comprenant un module d'authentification fonctionnant pour délivrer le certificat à l'identité ; ou un serveur de téléphonie pour transmettre à un dispositif hors bande une réponse pour une séquence de question et réponse présentée à l'identité par le serveur.

17. Article manufacturé comprenant un support de stockage de programme lisible par un ordinateur, le support incorporant de manière tangible un ou plusieurs programmes d'instructions exécutables par l'ordinateur pour effectuer un procédé pour authentifier mutuellement un client et un serveur, le procédé comprenant :
la transmission, sur une première connexion, d'un jeton comprenant un identificateur unique, ledit jeton étant signé avec une clé privée associée à un certificat de serveur ;
la réception d'une première réponse à la transmission du jeton, la première réponse comprenant une demande pour établir une liaison de transfert de données sécurisée sur une deuxième connexion, la deuxième connexion étant distincte de la première connexion ;
la transmission du certificat de serveur et d'un identificateur de localisateur universel de ressources (URL) sur la deuxième connexion ;
en réponse à la transmission du certificat de serveur et de l'identificateur de localisateur universel de ressources (URL) sur la deuxième connexion, la réception d'une deuxième réponse sur la première connexion comprenant un identificateur d'authenticité correspondant à une deuxième clé privée associée à un deuxième certificat distinct du certificat de serveur ; et
la validation de la deuxième réponse ;
ledit procédé étant effectué par un système informatique qui comprend un ou plusieurs dispositifs informatiques.
